# EUROPEAN PATENT APPLICATION

(11) **EP 1 924 105 A2**
(43) Date of publication of application: **21.05.2008**
(21) Application number: 07120472.1
(22) Date of filing: 12.11.2007
(51) Int. Cl.: H04Q 7/22, H04L 29/08

(54) **Combined map and positioning service for a mobile terminal device and a server for implementing the same**

(30) Priority: 16.11.2006 FI 20065731
(71) Applicant: Fonecta Ltd., 00510 Helsinki (FI)
(72) Inventor: Wahlström, Rauno, 00210, Helsinki (FI)
(74) Representative: Kärkkäinen, Veli-Matti

(57) **Abstract**

This invention relates to positioning a mobile terminal device at the request of a user and indicating location on a map base that is downloaded to a mobile terminal device. Particularly, the invention relates to downloading a map where the location of the mobile terminal device that requested the service is marked. Furthermore, the invention relates to downloading a map indicating the location of a mobile terminal device to another mobile terminal device. The invention also relates to downloading a map indicating the location of a second mobile terminal device designated by the mobile terminal device that requested the service to a third mobile terminal device.

## Description

### Field of the invention

This invention relates to positioning a mobile terminal device at the request of a user and indicating its location on a map base that is downloaded to a mobile terminal device. Particularly, the invention relates to downloading a map where the location of the mobile terminal device that requested positioning is marked. Furthermore, the invention relates to downloading a map indicating the location of a mobile terminal device to another mobile terminal device. The invention also relates to downloading a map indicating the location of a second terminal device designated by the mobile terminal device that requested the service to a third mobile terminal device.

### Background of the invention

Positioning has become a popular application in mobile terminal devices. Today motorists and hikers are sold mobile terminal devices equipped with GPS (Global Positioning System) receivers where map material covering a large area is downloaded for use. The devices receive signals sent by GPS satellites, on the basis of which they are able to calculate their own location. The location of the device is shown to the user marked on a map base. The map material may also include service location information, such as service stations and/or restaurants. A first problem with such devices is that the map material is required to cover a large area (potentially the whole area in which the user can be anticipated to move). Due to limited memory capacity, the user of the mobile terminal device must reload the map material to his/her device when moving around in an unusual area. Another significant problem with these devices is updatability. The map material is typically sold on a CD disc or on some other memory medium, and subsequent changes to services and their locations are not updated in the material. A third problem with GPS devices is that they do not enable indicating one's own location to other GPS device users and it is not possible to see the location of other GPS device users on one's own device.

GPS technology is also used for positioning mobile telephones, as disclosed in the patent US 6,677,894, for example. In the system disclosed in this document a mobile telephone requests that it be positioned, in connection with a 911 call, for example, by a positioning server of a network by sending an SMS message addressed to the positioning server. The SMS message contains information on the GPS signal received by the telephone. Based on the information, the positioning server calculates the location of the mobile telephone. Subsequently, the location of the mobile telephone is reported to the emergency center, which can direct help to the appropriate address by means of the location information. Location determination may also be activated by a call to a service number of a call service center. In this case, the positioning server reports the calculated location of the mobile telephone in question to a dedicated application server that maintains location information on a plurality of different mobile telephones and marks the locations on a map base. Such an application server may be a server monitoring the location of motor vehicles, for example, or another call service center. The location information is shown to an operator of the call service center, who may respond to questions posed by a caller on the basis of the location information. In these applications the map indicating location is not shown to the telephone user and cannot be downloaded to a telephone.

The same patent application describes another system in which it is possible for a mobile telephone user to request his/her location and information related to the location, such as a map, over a Web connection, typically using some TCP/IP protocol (such as HTTP) and HTML-based documents. A location query begins by a mobile telephone setting up a data connection to the Internet and particularly to a Web server connected to a positioning server of a mobile telephone network. Over the data connection the mobile telephone can provide its exact location information, information on the basis of which the positioning server can calculate the location, or an address written by the mobile telephone user. Subsequently, the Web server presents an HTML-based WEB document containing links through which the user can select desired services or downloadable information, including map information related to his/her location. A drawback with this system is that the mobile telephone user must, when desiring a map related to his/her location, first activate a browser of the mobile telephone, after which the browser sets up a connection to the Web server. Setting up such a data connection in a mobile telephone network is slow and the first service page is downloaded to the mobile telephone only after the data connection has opened up to the destination. By further following links on the service page the user may choose a desired service, after which the actual positioning finally takes place.

Furthermore, this system does not enable the user, at his/her own request, to indicate his/her own location or the location of others to other users.

Novasys Maponair Cityfind and Citymap services are also known; their brochures are available at www.maponair.com and enclosed with this patent application as Appendices 1 and 2. In these services as well, as in the system according to US 6,667,894, a user may only request that his/her location be determined and indicated on a map to be downloaded to a telephone after the activation of a browser in the telephone and setting up a data connection to an address written in the browser. When the browser of the telephone has been activated and the data connection set up, the user can click a link that initiates positioning. After the positioning the user receives a map indicating his/her location on his/her telephone and may further select services related to his/her location using separate links. The problems with this service are the same as above: the user cannot request the determination of his/her location before the slow opening of a browser and the set-up of a data connection to be opened to an address written in the browser. Nor can the user indicate his/her location to others or request the indication of the location of others to him/herself or to others.

Another map service by the same manufacturer is Novasys Maponair MMS-Map; a brochure is enclosed as Appendix 3. In this service a user may request a map of a desired location. The user writes in an SMS message the address whose surroundings he/she is interested in and sends the SMS message to a service number. As a response message the user receives an MMS message containing a map of the surroundings of the desired address with the given address marked on the map. In this service the user cannot request the positioning of his/her own location or indicate his/her own location to other users or request that the location of others be indicated to him/herself or others.

A map service Streetdirectory is further known; a brochure is available at streetdirectory.com and enclosed as Appendix 4. In this service a mobile telephone user writes in an SMS message the zip code of an area he/she is interested in and receives links to maps of the area in various sizes as a response message. The maps can be downloaded by clicking the links. Even in this service the user cannot request that his/her own location be positioned or indicate his/her own location to others or request that the location of others be indicated to him/herself or others.

### Brief description of the invention

An object of the present invention is a service wherein a user of a mobile terminal device can request that his/her own location be positioned without activating a browser of the terminal device and setting up a data connection.

Another object of the invention is a service wherein a user of a mobile terminal device can request that his/her own location be positioned without activating a browser of the terminal device and setting up a data connection and can download a map indicating his/her location to be displayed by a browser or other media application of his/her mobile terminal device.

A further object of the invention is a service wherein a user of mobile terminal device can indicate his/her location to a user of another mobile terminal device by enabling downloading of a map indicating his/her location to be displayed by a browser of the mobile terminal device of the other user.

Yet another object of the invention is a service wherein a user of a mobile terminal device can request the positioning of any mobile terminal device designated by him/her without activating a browser of the mobile terminal device and setting up a data connection and can request a map indicating location to be arranged to be downloaded for display by a browser or other media application of any mobile terminal device designated by him/her.

A particular object of the invention is a method for indicating the location of a mobile terminal device at the request of a user of the mobile terminal device requesting the service in a system comprising a plurality of mobile terminal devices and a server, wherein the location of the mobile terminal device to be positioned is indicated by creating a map indicating the location of the mobile terminal device for display by a media reproducer of the mobile terminal device that is the object of the service, characterized in that the server acquires information necessary for creating a map indicating the location of the mobile terminal device to be positioned at the request of the user of the mobile terminal device that requested the service and stores said information in a memory before a connection between the server and media reproducer in the mobile terminal device that is the object of the service is opened.

Another object of the invention is a method for positioning a mobile terminal device and indicating its location at the request of a user in a system comprising a plurality of mobile terminal devices and a server, wherein the location of a mobile terminal device to be positioned is indicated by creating a map indicating location for display by a media reproducer of the mobile terminal device that is the object of the service, characterized in that the server receives a service request; the server, as a response to the request, acquires and stores in a memory information for creating a map indicating location; the server, as a response to the acquisition and storage in the memory of said information, sends a link to said acquired and stored information addressed to the mobile terminal device that is the object of the service.

Yet another object of the invention is a server for indicating the location of a mobile terminal device at the request of a user, in a system comprising a plurality of mobile terminal devices in addition to the server, characterized in that the server comprises means for receiving a service request sent by the mobile terminal device that requested the service; means for collecting and storing in a memory information necessary for creating a map indicating location; and means for creating a link pointing to said information collected for creating a map indicating location; and means for sending said link to the mobile terminal device that is the object of the service by other means than using a connection set up by a media reproducer of the mobile terminal device that is the object of the service.

Said invention provides a number of advantages, e.g. that the service according to the invention is easy and convenient to use. From the point of view of a user of a mobile terminal device, it is much easier and quicker to write a simple SMS message than to activate a browser and write a link to the homepage of the service in the browser. Also, from the point of view of the user, the service experience is much smoother as the browser of the mobile terminal device upon opening automatically downloads a map indicating the user's location, without any other actions by the user or waiting for the actual positioning. Furthermore, said invention enables indicating one's own or someone else's location to user(s) of other terminal device(s).

The object, features and advantages of the invention will become apparent to a person skilled in the art on the basis of the following detailed description of a preferred embodiment of the invention and the figures.

### Brief description of the figures

Figure 1 describes the set-up, message sequence and release of a TCP/IP connection according to the HTTP protocol.
Figure 2 illustrates the progress of a service according to the invention from a service request to the sending of an HTTP link.
Figure 3 describes how the service according to the invention continues up to the downloading of a service-transaction-specific file through the HTTP link.
Figure 4 illustrates subsequent message exchange in the service according to the invention, wherein a browser of a mobile terminal device downloads an actual map form page and parameters needed for calling a map.
Figure 5 shows, among calls within the service according to the invention, a call from a browser of a mobile terminal device to a map server and transmission of a map image created by the map server.
Figure 6 shows a service according to the invention wherein a user of a mobile terminal device wishes to indicate his/her location to a user of another mobile terminal device.
Figure 7 illustrates the operations of a server according to the invention as the service progresses.

### Detailed description of the figures

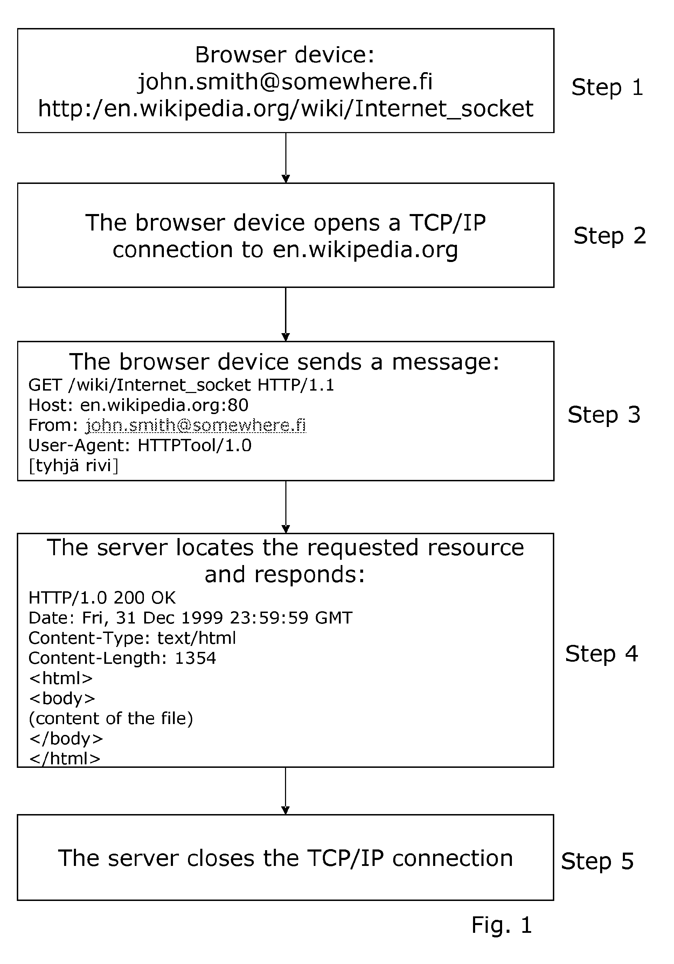

Figure 1 shows the HTTP protocol on a general level and the set-up, message sequence and release of a TCP/IP connection according to the HTTP protocol. The HTTP protocol (or WAP protocol) is a protocol intended for use by browsers for retrieving documents (or, more generally, resources) from a server.

When a user whose e-mail address is, for example, john.smith@somewhere.fi writes the URL http://en.wikipedia.org/wiki/Internet socket in a browser and presses Enter at Step 1, the following takes place:
The browser opens a TCP connection (TCP socket) to the server en.wikipedia.org (Step 2);
At Step 3, the browser sends an HTTP-get message through the connection set up at Step 2;
At Step 4, the server locates the requested file and returns an HTT P-response message containing the requested file through the same connection;

When the entire response has been sent, the server closes the connection at Step 5. The user's browser displays the received document modified according to HTML coding.

Therefore, the HTTP protocol was originally intended for retrieving HTML-coded documents located on a server and presenting them on a client computer. Today the HTTP protocol has also found its use in calling service logics located on a server with given parameters. The parameters are separated from the remaining call with a question mark. For example, a message according to the HTTP address http://www.02.fi/hae/id?10302FrD2rB2wr21r13164 calls a service program located in the directory /hae/id on the server www.02.fi with the parameter 10302FrD2rB2wr21r13164. Typically, the called service program executes its task using the given parameter(s). After executing the task, the service program sends its response in a textual format over the original TCP/IP connection to the caller. When the entire response has been sent, the called service program closes the TCP connection used. Therefore, the HTTP protocol is no longer used only by browsers but also by other applications and service logics located in different network elements calling each other, sometimes acting as clients and sometimes as each other's servers. Hereinafter in the specification of the present invention "HTTP address" may refer to (depending on the context) a connection set-up and message transmission sequence that is identical to the connection set-up and message transmission sequence caused by the HTTP address in question in a browser, even if the actual connection set-up and message transmission were not initiated by a browser.

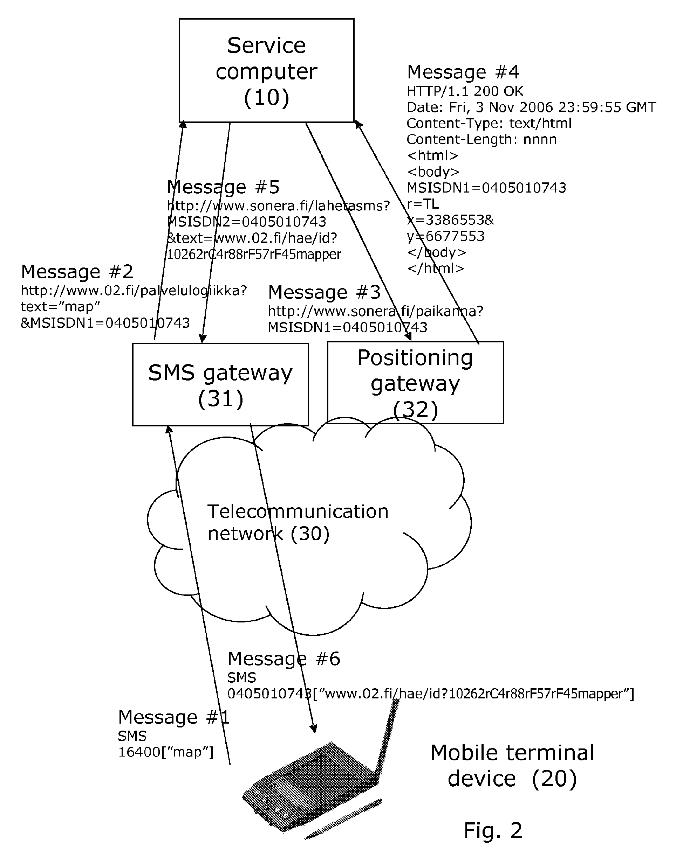

By way of example, the service according to the invention can be implemented on a mobile terminal device in an existing GSM/3G network in the manner indicated in Figures 2 to 6. A telecommunications operator (e.g., Sonera, Elisa, DNA, etc.) operates its telecommunication network (30), in which a user of a mobile terminal device (20) is one subscriber. The telecommunication network (30) provides modem telecommunication services, such as voice and video calls, transmission of SMS messages, transmission of multimedia messages, positioning of mobile terminal devices, and TCP/IP or WAP data connections for use by a browser located in a mobile terminal device. The telecommunication network (30) may also provide other services, such as "streaming media" services. The telecommunication network (30) may also be some other network (other than GSM/3G) with mobile terminal devices. From the point of view of the invention, it is essential that the telecommunication network provides mobile terminal devices with some type of a message transmission service, a TCP/IP or WAP data connection service for use by a browser or other media reproducer included in a mobile terminal device.

In the following, the invention will be described by means of an example shown in Figures 2, 3, 4, 5 and 6 in order to illustrate the invention. The exemplary description is not intended as limiting, but only to show how the invention can be taken into use with the current technology for mobile terminal devices in current telecommunication networks.

The service according to the example begins in Figure 2 when a user of a mobile terminal device (20) sends an SMS message written by him/her to a given service number (message #1). The written SMS message includes an identifier indicating the service, the word "map", for example, which a service computer (10) is able to recognize as a service request. A service provider has informed users of words to be written that are suitable for service requests in advance, so they are known to users. The user of a mobile terminal device addresses the SMS message to the number 16400, which is Fonecta's SMS service number.

The SMS message "map" addressed to the service number 16400 by the user of a mobile terminal device is directed to an SMS gateway (31) of a telecommunications network. The SMS gateway (31) is a computer managed by a telecommunications operator, which receives SMS messages addressed to service numbers and which knows how to convert a destination number included in the SMS message to an address according to the HTTP protocol by means of a table included therein. In the example case, the SMS gateway (31) recognizes that the SMS message addressed to the SMS service number 16400 must be converted to an address http://www.02.fi/palvelulogiikka. The SMS gateway (31) writes the content of the SMS message as such, in this case the work "map", as a parameter "text" in the HTTP link and adds as a parameter "MSISDN1" the unambiguous ID of the mobile terminal device, in this case the MSISDN number of the mobile terminal device, which can be found in the header data of the received SMS message, here 0405010743. The SMS gateway (31) sends an HTTP-get message (message #2) corresponding to the HTTP link to the service computer (10).

Alternatively, the user of a mobile terminal device may request indication of his/her location by calling an operator on call on a service number. In this case, message #1 is replaced by a telephone call, but in other respects the execution of the service continues in the same way.

When a service logic on the service computer (10) receives message #2 containing the code word "map" indicating the service and the unambiguous ID of the mobile terminal device, the service logic on the service computer (10) recognizes the code word indicating the service as a service request. As the parameter "text" contains no other information, the service logic determines that the object of the service is the mobile terminal device that also requested the service and sets the parameter "MSISDN2" at the same value as that of the parameter "MSISDN1". Subsequently, the service computer searches in a separate database to determine to which telecommunication operator the MSISDN number in question belongs. The service computer checks whether this operator provides a positioning service for its subscribers. If it does, the service computer sends a mobile terminal device positioning request to a positioning gateway (32) of the operator in question in message #3. This takes place as agreed with the operator. The service computer (10) sends the MSISDN number of the mobile terminal device to be positioned, 0405010743, as a parameter in message #3 addressed to a positioning logic, http://www.sonera.fi/paikanna, in the telecommunications operator's positioning gateway (32). The logic initiating the positioning waits for positioning requests at the HTTP address in question. The actual positioning may take place in various ways, depending on which positioning methods the telecommunications operator operating the telecommunications network has at its disposal. The positioning may take place using a Cell Identification method, for example, where the location of a base station used by a mobile terminal device is assumed to be the location of the mobile terminal device. The positioning may also take place using the TDOA (Time Difference of Arrival) method, where detection sensors located at three different points measure radio signals from a mobile terminal device and the location of the mobile terminal device is unambiguously determined on the basis of the difference between radio signal arrival times. There are many other positioning methods as well, such as E-OTD (E-Observed Time Difference), where a mobile terminal device itself calculates its location. From the point of view of this invention, the positioning method used is not relevant, but the invention is suitable for use independently of the actual positioning method.

The telecommunication network (30) positions the requested mobile terminal device (20) using the selected positioning method. The results of the positioning transaction (the x-y coordinates of the mobile terminal device and the accuracy of the positioning) are returned by the positioning gateway (32) of the telecommunication network (30) to the service logic on the service computer (10) in message #4.

The service logic on the service computer (10) receives the positioning result in message #4 and recognizes, while analyzing the content of the message, that the positioning was successful. As a result of successful positioning, the service computes creates an individual transaction ID for the service transaction, for example "10262rC4r88rF57rF45mapper". The service computer (10) saves a file under the name of the transaction ID, where it stores parameters related to this particular service transaction; in this case, for example, the file to be saved, 10262rC4r88rF57rF45mapper, comprises the following lines:
http://www.02.fi:2030/naytakartta/naytakartta?
Mode=SMSlocate
&r=TL
&x=3386553&
&y=6677553
&number=100m
&city=accuracy
&street=Location
&number= 100m
&mapcode=level1
&msisdn1=0405010743
&wgsx=24.951677459524724
&wgsy=60.19375251235978
&mkitc=1161865694982

Next, the service logic on the service computer (10) creates message #5 that contains an URL pointing to the file saved under the name of the transaction ID and the MSISDN number of the mobile terminal device. The service computer sends message #5 to the SMS gateway (32) of the telecommunication network (30) at http://www.sonera.fi/lahetasms. An SMS service program waiting at the address creates message #6 on the basis of the information in message #5. Message #6 is an SMS message according to the WAP-push specification addressed to the MSISDN number 0405010743 and containing an HTTP address, http://www.02.fi/hae/id?10262rC4r88rF57rF45mapper, pointing to the file saved under the name of the transaction ID. However, the invention is not limited to using SMS messages; rather, the invention may be implemented using any message system that supports the sending of HTTP addresses. For example, the SMS gateway could be replaced by an e-mail gateway comprising corresponding functionality without deviating from the idea of the invention.

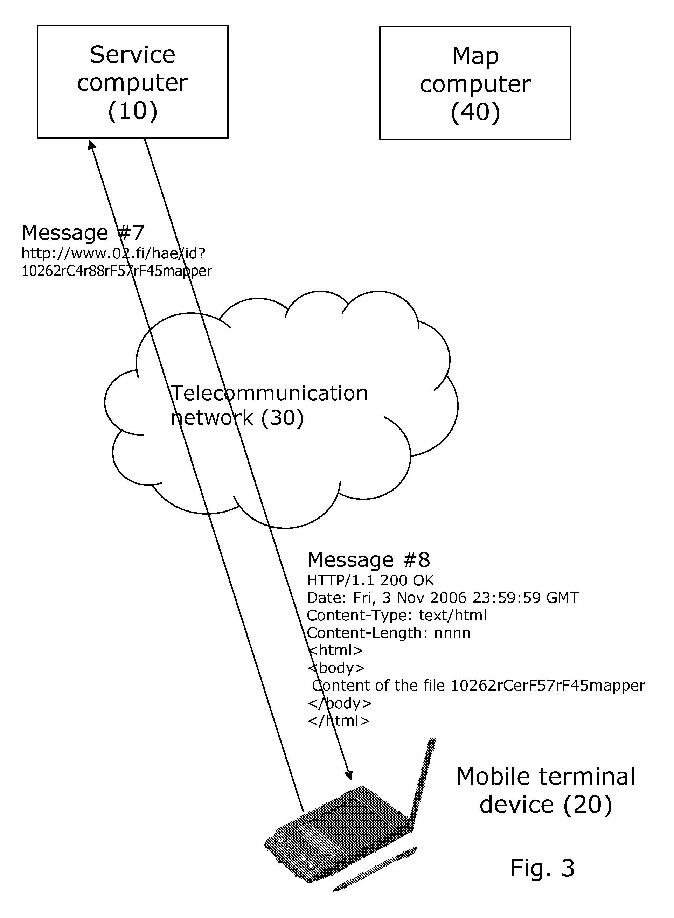

Referring to Figure 3, the user of the mobile terminal device that requested positioning (20) clicks the HTTP address (URL link) shown in the received message, which activates a browser included in the mobile terminal device. The browser opens a TCP/IP connection to the service computer (10) at www.02.fi and requests the resource /hae/id with the parameter 10262rC4r88rF57rF45mapper in message #7. Message #7 is thus the first message according to the HTTP (or WAP) protocol from the mobile terminal device (20) over the TCP/IP connection. In this first message the mobile terminal device reports the resolution of its display in a "User-Agent:" field (either specifically, e.g., "&width=164, &height=134", or by means of its type, e.g., "Nokia6100", based on which the service computer is able to determine the resolution of the display using its auxiliary table). The service computer identifies the requested resource (file) and sends the content of the file to the mobile terminal device (20) in message #8. Upon receiving the message the browser of the mobile terminal device (20) detects that it is required to make a new resource request to http://ww.02.fi/naytakartta/naytakartta with the parameters given in the file 10262rC4r88rF57rF45mapper.

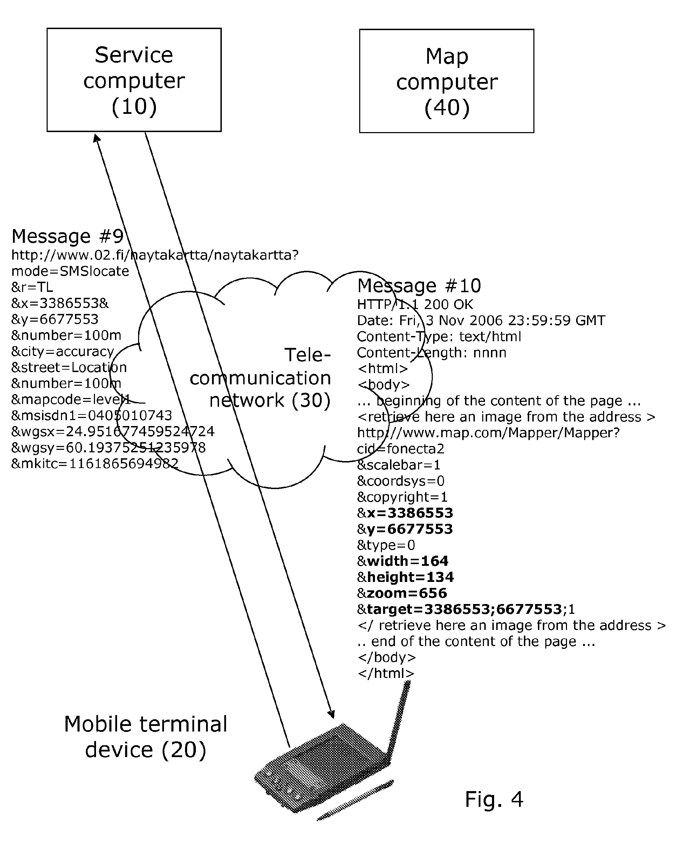

The browser of the mobile terminal device (20) sends this resource request in message #9 shown in Figure 4. A naytakartta/naytakartta ("show map") service program located on the service computer receives the parameters sent in the message and dynamically creates a new content page to be displayed by the browser of the mobile terminal device. The content page is downloaded in message #10 shown in Figure 4. The content page is an HTML-format form that comprises pull-down menus for different service categories; for example, in the category restaurants it is possible to select pizza restaurants, ethnic restaurants, steak houses, etc. In addition, the content page comprises an area reserved for a map image and an instruction to retrieve the map image from the map server at www.map.com with the parameters collected during the service (among others, the location of the mobile terminal device that requested positioning, and the coordinate system in which the location is indicated, the image size according to the resolution of the display).

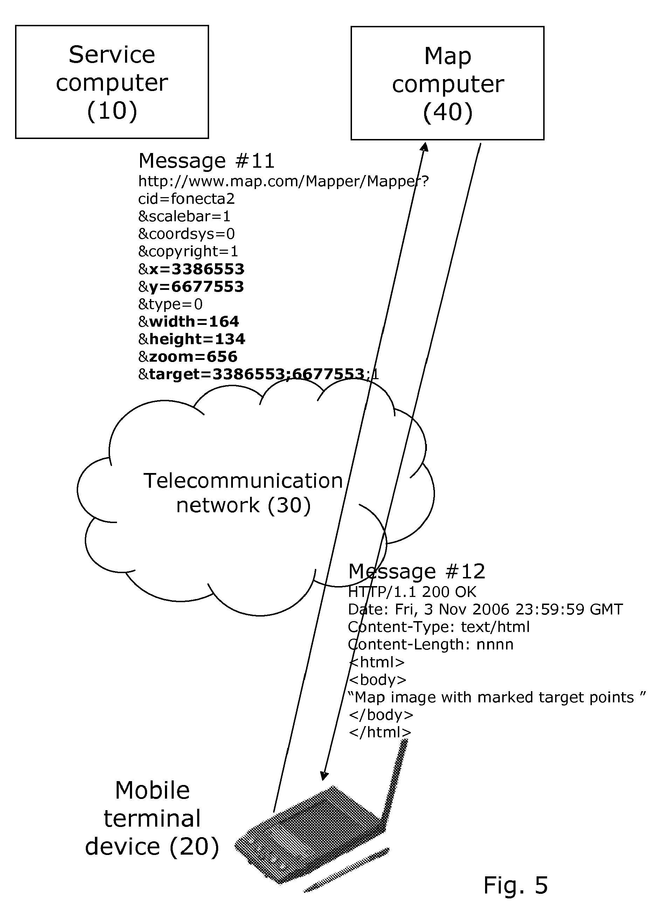

An image call sent by the browser of the mobile terminal device (20) is presented in message #11 shown in Figure 5. Upon receiving the map call the map server creates a map in a JPEG format, for example, in the size 164x134 pixels according to the width and height parameters sent, with the location of the mobile terminal device, indicated by the parameters x=3386553 and y=6677553, as the center point. In addition, the map server marks a circle, for example, in the place indicated in a parameter target=3386553;6677553;1. In this case, the place is the center point of the map and the location of the mobile terminal device that requested positioning. The map server sends the map to the browser of the mobile terminal device (20) in message #12.

Now the browser of the terminal device displays to the user the map where the location of the terminal device is marked. The user can now select desired services in the pull-down menus. Thereby the browser of the terminal device receives an update from the service computer concerning which other locations should be marked on the map (i.e., new parameters for a http:www.map.com/Mapper/Mapper message). The browser again retrieves a new map image from the map server, which creates the new map image with the given parameters.

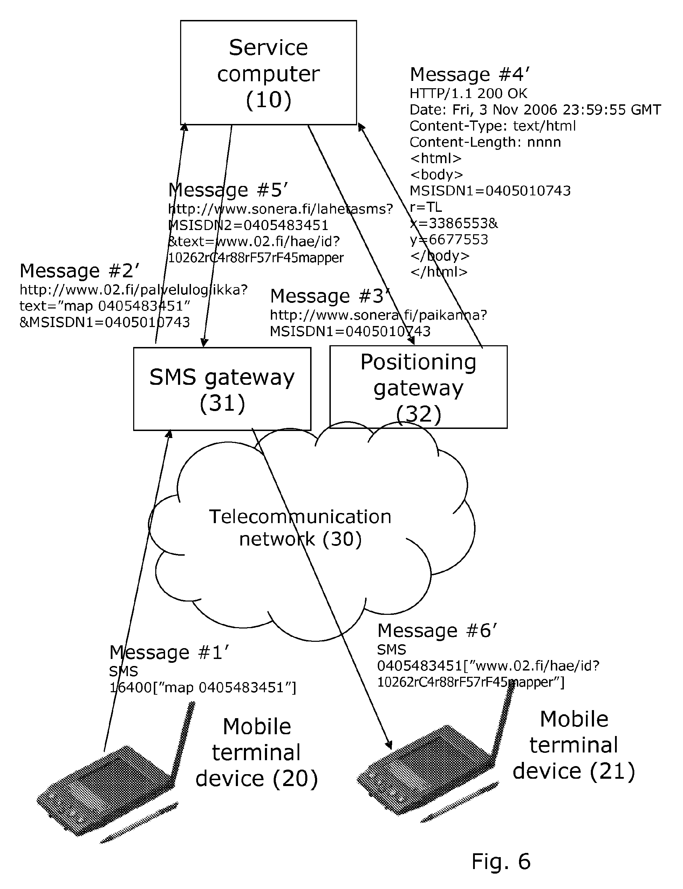

The map and positioning service according to the invention also enables indicating one's location to a user of another mobile terminal device. The user of the mobile terminal device (20) requesting the service may designate another mobile terminal device (21) as the object of the service. This is illustrated in Figure 6. This time the user of a mobile terminal device (20) wishes to indicate his/her location to the user of a mobile terminal device (21). In this case, the user of a mobile terminal device (20) initiates the service in the same way as earlier by sending an SMS message written by him/her to a given service number (message #1'). In this case, he/she writes in the SMS message the MSISDN number of a mobile terminal device, MSISDN2, in this example 0405483451, in addition to the identifier "map" indicating the service. The user of a mobile terminal device (20) addresses the SMS message to the number 16400, which is the same SMS service number of Fonecta.

The SMS message "map 0405483451" addressed to the service number 16400 by the user of a mobile terminal device is directed to an SMS gateway (31) of a telecommunication network (30). The SMS gateway (31) writes the content of the SMS message as such, in this case "map 0405483451", in an HTTP link as a parameter "text" and adds as a parameter "MSISDN1" the unambiguous ID of the mobile terminal device that requested the service, in this case, the MSISDN number of the mobile terminal device, which can be found in the header data of the received SMS message, here MSISDN1=0405010743. The SMS gateway (31) sends an HTTP-get message (message #2') corresponding to the HTTP link shown in Figure 6 to a service computer (10).

When a service logic on the service computer (10) receives message #2' containing the code word indicating the service and numerical data, "map 0405483451", in the parameter "text", and the parameter "MSISDN1, the unambiguous ID of the mobile terminal device (20) that requested the service, the service logic on the service computer (10) recognizes the code word indicating the service as a service request. While further analyzing the content of the SMS message, the service logic recognizes the numerical data and determines that it is the unambiguous ID, MSISDN2, of the mobile terminal device (21) that is the object of the service. Subsequently, the service computer searches a separate database to determine which telecommunications operator the MSISDN number,'MSISDN1, of the mobile terminal device that requested the service (20) belongs to. The service computer checks whether this telecommunications operator provides a positioning service to its subscribers. If it does, the service computer sends the mobile terminal device's positioning request to a positioning gateway (32) of the telecommunications operator in question in message #3. Subsequently, the service progresses as described above up to the sending of message #5'. The service computer (10) writes in this message the MSISDN number MSISDN2 instead of the earlier MSISDN1, as the party that requested the positioning service requested the service to indicate his/her location to another user, not to him/herself. Consequently, message #6' is also addressed to the MSISDN number MSISDN2, which is the MSISDN number of the object (21) designated by the mobile terminal device that requested the service (20). Henceforward, the messages related to the service comply with the messages of the service described above, so they will not be described in any greater detail in this context.

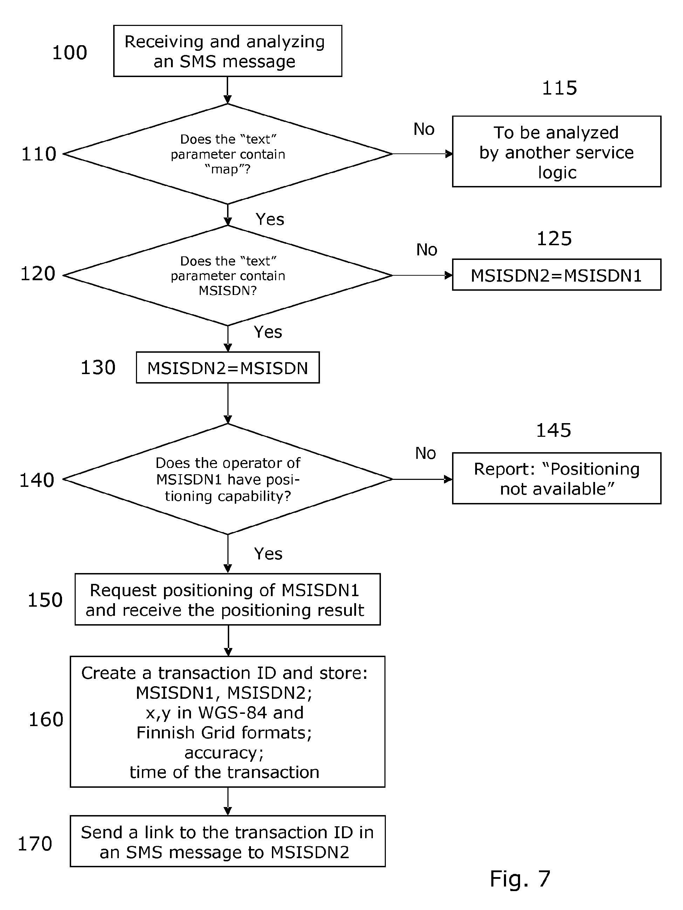

The server implementing the service (10) is a computer of a service provider, where the logic implementing the service and other service logics are programmed. The server further comprises normal server features, such as telecommunication software (here, for example, TCP/IP-based telecommunication software). Next, the flow chart shown in Figure 7, describing the operation of the server when executing the service, will be described in detail.

The execution of the service begins at Step 100 when the server (10) receives a message containing the MSISDN number of the mobile terminal device that requested positioning and the content of the SMS message sent by it. The message received by the server may be a message created by an SMS gateway of a telecommunications operator, as here, or the SMS message as such. In this case, the server must include a service logic supporting the SMS protocol.

Next, at Step 110, a service logic on the server (10) analyzes the SMS message written by the user of the mobile terminal device that requested the service (20). If the SMS message contains the code word "map", the server determines that the user has requested a map and positioning service and proceeds to Step 120. If the code word indicating the service is not found, the service logic sends the content of the SMS message to be examined by other service logics at Step 115.

At Step 120, the service logic examines whether the SMS message contains numerical data in addition to the code word indicating the service. If it does not, the service logic determines that the object of the service will be the same mobile terminal device that requested the service and sets the "MSISDN2" parameter at the same value as that of the "MSISDN1" parameter at Step 125. If the SMS message contains numerical data, the service logic determines that the numerical data in the SMS message is the MSISDN number of the mobile terminal device that is the object of the service and sets the numerical data as the value of the "MSISDN2" parameter at Step 130.

Subsequently, at Step 140, the service logic checks in its auxiliary table whether MSISDN1 is an MSISDN number of a telecommunication operator providing positioning services. If not, the service logic proceeds to Step 145 and reports to the mobile terminal device that requested the service that positioning is not available. If positioning is available, the service logic proceeds to Step 150, where it requests positioning from a positioning gateway of the telecommunications operator and receives the positioning result. Here it must be noted that the service computer may also be the telecommunications operator's own server and may have some other form of access to the operator's positioning system than through the operator's external positioning interface.

Upon receiving the positioning result the service logic on the server (10) creates an individual single-use transaction ID (using modified MD5 coding, for example). At Step 160, the service logic stores, under the name of the transaction ID, the information related to the service transaction collected so far, among others the "MSISDN1" and "MSISDN2" parameters; the x and y coordinates of the location of the mobile terminal device that requested the service, received as a result of the positioning, in both WGS-84 and Finnish Grid formats; an estimate of the accuracy of the positioning; and the time of the positioning transaction.

Next, at Step 170, the service logic sends a link pointing to the file saved under the name of the transaction ID to the mobile terminal device that is the object of the positioning. In a preferred implementation, the service logic sends the message to the SMS gateway of the telecommunications operator, but it could equally well itself send the SMS message.

When the user clicks the received link, the mobile terminal device he/she uses opens a browser, which in turn sets up a connection to the server and requests the content of the file saved under the name of the transaction ID, wherein the execution of the service continues as explained in connection with the figures described above.

In addition to the examples described above, the present invention enables implementing the map service indicating location in various ways. With a small modification it is possible to request positioning of another mobile terminal device and sending a link pointing to a map indicating a location to the mobile terminal device that is the object of the service. For example, the mobile terminal device requesting the service may send an SMS message "on_the_map 5551234567", wherein the server recognizes by the code word "on_the_map" that this time the terminal device requesting the service wants information necessary for a map indicating location to be collected on the location of the mobile terminal device "5551234567", not the location of the mobile terminal device that requested the service. After the information has been collected, a link pointing to the information is sent to the mobile terminal device that requested the service here. If the service request had included another MSISDN number, the server would have recognized that the object of the service would have been a terminal device other than the mobile terminal device that requested the service. In order to administer this service, the server (10) must have an auxiliary table listing the MSISDN numbers of mobile terminal devices allowing positioning requests concerning themselves from each other. Each time the server detects that a mobile terminal device requesting the service requests that the location of a mobile terminal device other than itself be indicated, the server checks whether a permission to do so is present. The auxiliary table may be either internal to the server or administered by a telecommunications operator or another service provider.

## Claims

1. A method for indicating the location of a mobile terminal device at the request of the user of the mobile terminal device requesting the service in a system comprising a plurality of mobile terminal devices and a server, which method comprises indicating the location of the mobile terminal device to be positioned by creating a map indicating the location of the mobile terminal device to be positioned for display by a media reproducer of the mobile terminal device that is the object of the service, **characterized in that** the server acquires at least part of the information necessary for creating a map indicating the location of the mobile terminal device to be positioned at the request of the user of the mobile terminal device that requested the service and stores said information in a memory before a connection between the server and a media reproducer of the mobile terminal device that is the object of the service is opened.

2. A method according to claim 1, further **characterized in that** the server receives a positioning request from a user by some other means than over a connection set up by a media reproducer of the mobile device that is the object of the service.

3. A method according to claim 1, further **characterized in that** the server sends a link pointing to the information necessary for creating a map indicating location, addressed to the mobile device that is the object of the service, by other means than using a connection set up by a media reproducer of the mobile terminal device that is the object of the service.

4. A method according to claim 1, further **characterized in that** the server recognizes the request from the user of the mobile terminal device requesting the service after receiving information in an SMS message sent by the mobile terminal device requesting the service.

5. A method according to claim 1, further **characterized in that** the server sends a link pointing to the information necessary for creating a map indicating the location of the mobile terminal device to be positioned, addressed to the mobile terminal device that is the object of the service, in a message to be received by the mobile terminal device that is the object of the service.

6. A method according to claim 1, further **characterized in that** the mobile terminal device that requested the service is the mobile terminal device that is the object of the service.

7. A method according to claim 1, further **characterized in that** the mobile terminal device that is the object of the service is another mobile terminal device designated by the mobile terminal device that requested the service.

8. A method according to claim 1, further **characterized in that** the mobile terminal device that requested the service, the mobile terminal device to be positioned, and the terminal device that is the object of the service are the same mobile terminal device.

9. A method according to any of claims 1 to 8 or a combination thereof.

10. A method for positioning a mobile terminal device and indicating its location at the request of a user in a system comprising a plurality of mobile terminal devices and a server, wherein the location of the mobile terminal device to be positioned is indicated by creating a map indicating location for display by a media reproducer of the mobile terminal device that is the object of the service, **characterized in that** the server receives a service request; the server, as a response to the request, acquires and stores in a memory at least part of the information necessary for creating a map indicating location; the server, as a response to the acquisition and storing in memory of said information, sends a link to said acquired and stored information, addressed to the mobile terminal device that is the object of the service.

11. A method according to claim 10, further **characterized in that** the server sends the information necessary for creating a map indicating the location of the mobile terminal device to be positioned to the mobile terminal device that is the object of the service over a connection set up by a media reproducer of the mobile terminal device that is the object of the service.

12. A method according to claim 10, further **characterized in that** said link to said acquired and stored information, addressed to the mobile terminal device that is the object of the service and sent by the server, is sent to the mobile terminal device that is the obbject of the service by other means than over a connection set up by a media reproducer of the mobile terminal device that is the object of the service.

13. A method according to claim 10, further **characterized in that** said link to said acquired and stored information, addressed to the mobile terminal device that is the object of the service and sent by the server, is sent to be delivered as an SMS message to the mobile terminal device that is the object of the service.

14. A method according to claim 10, further **characterized in that** the mobile terminal device that requested the service is the mobile terminal device that is the object of the service.

15. A method according to claim 10, further **characterized in that** the mobile device that is the object of the service is another mobile terminal device designated by the mobile device that requested the service.

16. A method according to claim 10, further **characterized in that** the mobile terminal device that requested the service, the mobile terminal device to be positioned, and the mobile terminal device that is the object of the service are the same mobile terminal device.

17. A method according to any of claims 10 to 16 or a combination thereof.

18. A server for indicating the location of a mobile terminal device at the request of a user in a system comprising a plurality of mobile terminal devices in addition to the server, **characterized in that** the server comprises means for receiving a service request sent by the mobile terminal device that requested the service; means for collecting and storing, in a memory, at least part of the information necessary for creating a map indicating location; means for creating a link pointing to said information; and means for sending said link to the mobile terminal device that is the object of the service by other means than using a connection set up by a media reproducer of the mobile terminal device that is the object of the service.

19. A server according to claim 18, further **characterized in that** said means for sending said link to the mobile terminal device that is the object of the service send said link to be received by the mobile terminal device that is the object of the service in a message of a separate message system.

20. A server according to claim 18, further **characterized in that** said means for sending said link to the mobile terminal device that is the object of the service send said link to be received by the mobile terminal device that is the object of the service in an SMS message.

21. A server according to claim 18, further **characterized in that** it comprises means for sending said information collected for creating a map indicating location to the mobile terminal device that is the object of the service over a connection set up between a media reproducer of the mobile terminal device that is the object of the service and the server.

22. A server according to claim 18, further **characterized in that** the server further comprises means for receiving a service request from a user by other means than using a connection set up by a media reproducer of the mobile terminal device that is the object of the service.

23. A server according to claim 18, further **characterized in that** the server comprises means for sending a link to the information collected for creating a map indicating location, addressed to the mobile terminal device that is the object of the service, by other means than using a connection set up by a media reproducer of the mobile terminal device that is the object of the service.

24. A server according to claim 18, further **characterized in that** the server comprises means for sending a link to the information collected for creating a map indicating location, addressed to the mobile terminal device that is the object of the service, in an SMS message.

25. A server according to claim 18, further **characterized in that** the mobile terminal device that requested the service is the mobile terminal device that is the object of the service.

26. A server according to claim 18, further **characterized in that** the mobile device that is the object of the service is another mobile terminal device designated by the mobile device that requested the service.

27. A server according to claim 18, further **characterized in that** the mobile terminal device that requested the service, the mobile terminal device to be positioned, and the mobile terminal device that is the object of the service are the same mobile terminal device.

28. A server according to any of the claims 18 to 27 or a combination thereof.
